# EUROPÄISCHE PATENTANMELDUNG

(11) **EP 2 918 943 A1**
(43) Veröffentlichungstag der Anmeldung: **16.09.2015**
(21) Anmeldenummer: 15157080.1
(22) Anmeldetag: 02.03.2015
(51) Int. Cl.: F24H 4/04, F24H 9/20

(54) **Verfahren und Vorrichtung zur Erhöhung der Speicherkapazität von Wasserspeichern in Anlagen zur Beheizung von Gebäuden und/oder zur Erwärmung von Trink- und/oder Brauchwasser**

(30) Priorität: 10.03.2014 DE 102014204367
(71) Anmelder: KERMI GmbH, 94447 Plattling (DE)
(72) Erfinder: Fonfara, Harald, 94551 Lalling (DE); Fraitzl, Matthias, 94469 Deggendorf (DE)
(74) Vertreter: Patentanwälte Bressel und Partner mbB

(57) **Zusammenfassung**

Die Erfindung betrifft Verfahren und Vorrichtungen zur Erhöhung der Speicherkapazität von Wasserspeichern in Anlagen zur Beheizung von Gebäuden und/oder zur Erwärmung von Trink- und/oder Brauchwasser, wobei die Anlagen eine Photovoltaikanlage, einen elektrisch betriebenen Wärmeerzeuger mit einem Wärmespeicher und/oder mindestens einem elektrischen Heizstab, einen Energiemanager und ein Temperaturmodul umfassen, wobei die Anlagenteile Wärmeerzeuger und elektrischer Heizstab mit entsprechenden Temperaturfühlern ausgestattet sind, wobei von der Photovoltaikanlage über einen Energiezähler registrierte Elektroenergie erzeugt wird und in ein Stromversorgungsnetz eingespeichert wird und über den elektrisch betriebenen Wärmeerzeuger das Trink- und/oder Brauwasser erwärmt wird und über den Schwellwertschalter die von der Photovoltaikanlage zur Verfügung gestellte Elektroenergie ermittelt und ausgewertet wird und bei Erreichen eines frei einstellbaren Schwellwertes , ein elektrischer Kontakt zum elektrischen Wärmeerzeuger und/oder mindestens einem elektrischen Heizstab hergestellt wird, wobei nach der Herstellung des Kontaktes über den Schwellwertschalter das Temperaturmodul angesteuert wird, welches eine Vielzahl von Widerstandskombinationen umfasst, wobei durch Verschaltung mit den Temperaturfühlern des elektrischen Wärmeerzeugers und/oder des elektrischen Heizstabes eine vom tatsächlichen Temperaturwert abweichende Temperatur simuliert wird.

## Beschreibung

Die Erfindung betrifft ein Verfahren und Vorrichtungen für die vom Solarstromertrag abhängige Erhöhung der Kapazität von Wasserspeichern in Anlagen zur Beheizung von Gebäuden bzw. in Anlagen zur Erwärmung von Trinkwasser und/oder Brauchwasser. Im Markt existiert eine Vielzahl von Warmwasser - und Heizungsanlagen und Trinkwassererwärmern mittleren Alters, die sich wärmetechnisch auf einem relativ hohen Niveau befinden. Die für die Beheizung des Gebäudes erforderliche Vorlauftemperatur des Heizwassers wird bei diesen Anlagen vom Wärmeerzeuger nach einer fest eingestellten Heizkurve bereitgestellt, das am meisten verbreitete Verfahren ist das der sog. Außentemperatur-abhängigen Anpassung der Vorlauftemperatur, in Fachkreisen auch als "gleitende Vorlauftemperatur" bekannt. Trotz des hohen technischen Niveaus der Wärmeerzeugung sind die meisten dieser Anlagen aber von Seiten ihrer Regelung für die möglichst hohe Nutzung von Wärme aus selbst erzeugtem PV-Strom nicht geeignet. Eine nachträgliche Ausstattung mit einer hierfür geeigneten Regelung ist mit unverhältnismäßig hohem Aufwand verbunden. Hierfür müsste die vorhandene Regelung gegen eine solche mit einem Interface ausgetauscht werden, welches mit den Wechselrichtern der Photovoltaik (PV) - Anlage kommuniziert. Die große Vielfalt der im Markt befindlichen Regelungen verhindert, dass Ersatzregelungen mit den zusätzlichen Funktionen in großen Stückzahlen zu vertretbaren Preisen herstellbar sind, für den Betreiber einer Heizung im Zusammenhang mit einer PV-Anlage gilt aber das Gebot der Wirtschaftlichkeit der Maßnahme. Somit bleibt ein mögliches Sparpotenzial unerschlossen.

Zudem soll die aus der Sonne über die PV-Anlage gewonnene Elektro-Wärme nicht nur mit dem jeweiligen Temperatursollwert im Heizwasser- bzw. Trinkwasserspeicher eingespeichert werden, sondern, im Sinne eines möglichst hohen Eigenverbrauchsanteils des PV-Ertrags, auf einem höheren Temperaturniveau, um damit auf einfachste Weise einen Energievorrat für nachfolgende Verbrauchsperioden, z. B. für den folgenden Abend oder die folgende Nacht, zu schaffen. Umgekehrt ist aber ebenso notwendig, dass bei Entfall des Solarertrages die gewünschte Erhöhung der Speicherkapazität wieder rückgängig gemacht wird. Genau diese Erhöhung der Speicherkapazität in Abhängigkeit vom Solarertrag bedeutet aber im Stand der Technik einen Eingriff in die vorhandene Regelung mit dem Problem der Vielfalt der technischen Lösungen im Markt.

Die OS DE 10 2006 051 421 A1 offenbart eine Vorrichtung zur Klimatisierung eines Gebäudes mit einer PV-Anlage und einer elektrisch angetriebenen Wärmepumpe. Im Unteranspruch 5 wird eine Steuerungseinheit mit mehreren Ein-Aus-Schaltern beschrieben, an der ein Temperatur-Sollwert und/oder ein Temperatur-Regime einstellbar sind. Eine Lösung, wie dies bei der Vielfalt der Regelungen im Markt für den Gebäudebestand umgesetzt werden kann, findet der Fachmann hier nicht.

In der DE 100 48 035 B4 hingegen wird ein Energiemanagement einer Heizungsanlage mit einer Wärmepumpe beschrieben, bestehend aus kombinierten Wärme- und Solarstrom-Kollektoren, einem Heizkreislauf, einem Brauchwasserkreislauf und einem Langzeit-Erdreichspeicher mit dem Ziel der Minimierung der Energiekosten. Auch hier kann der Fachmann für die Nachrüstung älterer Anlagen im Gebäudebestand keine Lösung entnehmen.

Die DE 20 2013 008 243 U1 beschreibt eine Anordnung zur Erwärmung von Heizungs- und Trinkwasser mit Strom aus Photovoltaik. Die Anordnung besteht im Wesentlichen aus einem Wärmetauscher-Druckbehälter, der die von Solarstrom erzeugte Wärme dem Heizungssystem zur Verfügung stellt. Als einziger Hinweis auf Temperaturkennwerte ist eine an einem Thermostat am Druckbehälter eingestellte Solltemperatur vermerkt, die von einem Heizungsregler erkannt und zum Zuschalten einer Heizungspumpe verwendet wird. Eine Lösung, wie dies bei der Vielfalt der Regelungen im Markt für den Gebäudebestand umgesetzt werden kann, findet der Fachmann hier nicht.

Die DE 20 2013 101 076 U1 offenbart ein durch mehrere einstellbare Betriebsmodi gekennzeichnetes Warmwassersystem, bei dem eine Regeleinrichtung aus bis zu drei Betriebsmodi eine auswählt und dafür sorgt, dass mittels PV-Strom Wasser der Heizungsanlage erwärmt bzw. bereits erwärmtes Wasser aus einem Speicher in einen anderen umgeschichtet wird. Auch hier kann der Fachmann für die Nachrüstung älterer Anlagen im Gebäudebestand keine Lösung entnehmen.

Die Nachteile der o. g. Lehren sollen durch die vorliegende Erfindung überwunden werden.

Die Erfindung betrifft von daher ein Verfahren zur Erhöhung der Speicherkapazität von Wärmespeichern mittels Verschiebung der Temperatursollwerte von Heiz- und/oder Trinkwassererwärmungsanlagen sowie hierfür geeignete Vorrichtungen. Das erfindungsgemäße Verfahren ist in mehreren Ausprägungen realisierbar, die untereinander kombinierbar sind.

Das Verfahren umfasst einen Schwellwertschalter, der das von einem elektrischen Energiezähler zur Verfügung gestellte S0-Signal auswertet und somit die aktuell zur Verfügung stehende Leistung ermittelt. Erreicht bzw. überschreitet das Energieniveau einen frei einstellbaren Schwellwert, so wird ein potenzialfreier Kontakt geschlossen. Über diesen Kontakt ist es möglich, eine elektrisch betriebene Wärmepumpe oder einen oder mehrere Elektro-Heizeinsatz/-einsätze oder eine Kombination daraus anzusteuern. Vorteilhaft kommt in dem Verfahren bzw. der Anlage ein so genanntes "Temperaturmodul" zum Einsatz.

Das Temperaturmodul umfasst mindestens eine, bevorzugt aber eine Vielzahl von Widerstandskombinationen, die in geeigneter Verschaltung zum vorhandenen Temperaturfühler bewirken, dass der vom Regler auf der Basis seiner ursprünglichen Kennlinie errechnete und der am Fühler vorhandene tatsächliche Temperaturwert voneinander abweichen. Die Ansteuerung dieses Temperaturmoduls kann beispielsweise über einen Kontakt des oben genannten Schwellwertschalters befolgen.

Die Erfindung wird nachfolgend an einem ersten Beispiel näher erläutert:
Ein Regler einer Wärmepumpe ist auf den Warmwasser-Sollwert von 45°C eingestellt, beim angeschlossenen Fühler handelt es sich um einen NTC -Widerstand mit der Charakteristik 20 kΩ bei 25 °C.
Wird diesem Temperaturfühler eine Widerstandskombination aus einem Widerstand von 3.700 Ω in Reihe und einem weiteren Widerstand von 500.000 Ω parallel hinzugefügt, führt dies dazu, dass die Temperatur am Fühler ca. 60 °C betragen muss, um der Auswerteelektronik des Reglers ein Erreichen des Temperatur-Sollwertes von 45 °C zu signalisieren. Andererseits führt diese Widerstandskombination im Bereich niedrigerer Temperaturen, beispielsweise bei 20 °C am Fühler zu nahezu keiner oder nur unwesentlicher Verschiebung des Temperatursollwertes, so dass hier keine Beeinträchtigungen zu erwarten sind.
Soll hingegen die Temperatur von 40 °C nur auf 60 °C angehoben werden, so ändert sich der Wert für den Reihenwiderstand auf 5650 Ω, der des Parallelwiderstandes bleibt bei 500.000 Ω.
Damit kann auf einfache Weise, nämlich durch Auftrennen der Fühlerleitung und Einklemmen einer ausschließlich bei Solarertrag zugeschalteten passenden Widerstandskombination, die Sollwertverschiebung gewährleistet werden.

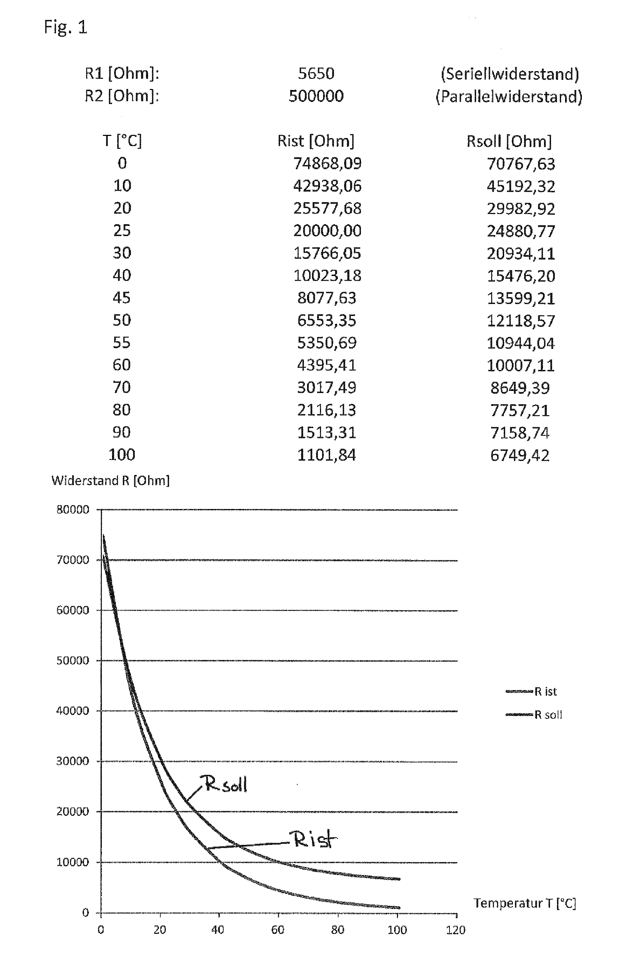

Die Fig. 1 zeigt beispielhaft eine Charakteristik für einen NTC - Widerstand 20 k Ω, Verschiebung von 40 °C auf 60 °C.

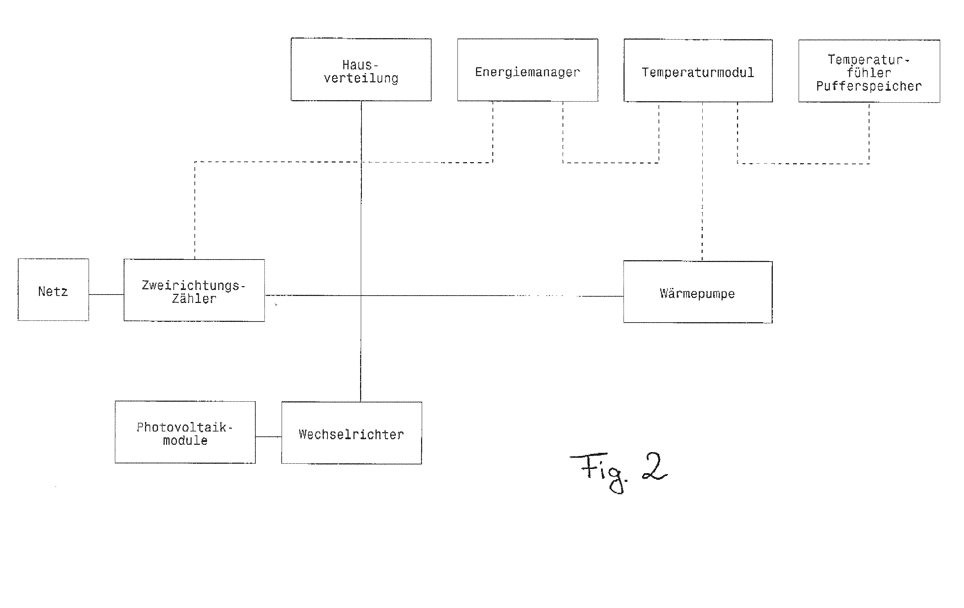

Fig. 2 einen Energiemanager mit PV für die Ansteuerung einer Wärmepumpe über das Temperaturmodul.

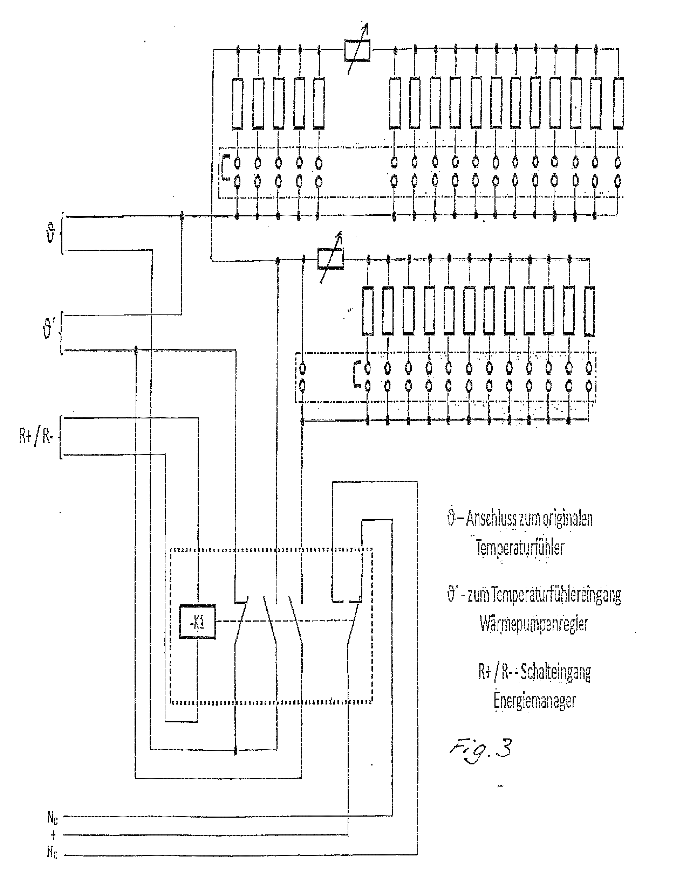

In einer besonders vorteilhaften Ausführung des Temperaturmoduls enthält dieses nicht nur eine einzige Widerstandskombination, sondern eine Vielzahl an Kombinationen (Fig. 3), die zulässt, je nach Einsatzsituation (Charakteristik des vorhandenen Fühlers, Temperatur-Sollwert im Standardbetrieb, Temperatur-Sollwert bei Solarertrag) aus einem Schema die passende z. B. durch Betätigung von DIP-Schaltern oder Setzen von Kontaktbrücken auswählen zu können.

Wird das Temperaturmodul infolge ausreichend Solarertrag von der PV-Anlage aktiv geschalten, verschiebt es die Kennlinie des Temperaturfühlers und täuscht dem Regler der Wärmepumpe eine niedrigere, nach unten korrigierte Ist-Temperatur vor. Der Wärmepumpenregler detektiert dies als Wärmeanforderung, läuft an und heizt bis zum Erreichen des in der Regelung der Wärmepumpe hinterlegten Sollwerts für die Wassertemperatur im Speicher. Da die im Speicher erfasste Ist-Temperatur jedoch niedriger als die tatsächliche ist, wird der Speicher höher beheizt, als es sonst, bei ausbleibendem Solarstrom, der Fall wäre. Dieser Energievorrat steht dann für den nachfolgenden Zeitraum zur Verfügung und dehnt somit den Zeitraum der Nutzung solarer Energie aus.

Unterschreitet die zur Verfügung stehende Leistung aus dem regenerativen Energieerzeuger den an der Reglereinheit voreingestellten Schwellwert, öffnet der Schwellwertschalter den Kontakt wieder, die Beschaltung des Fühlers wird wieder aufgehoben und in der Regelung wird die tatsächliche Wassertemperatur angezeigt. Für eine möglichst hohe Effizienz des Verfahrens ist von Vorteil, wenn die von der Wärmepumpe aufgrund des Kältekreisdesigns maximal erreichbare Speichertemperatur durch die Sollwertverschiebung nicht überschritten wird. Dies ist durch Voreinstellungen z. B. bei der Inbetriebnahme zu erreichen.

Eine Vorrichtung zur Umsetzung des oben beschriebenen Verfahrens besteht somit mindestens aus folgenden Komponenten:
· Photovoltaik (PV) -Anlage
· Elektrisch betriebener Wärmeerzeuger mit einem Wärmespeicher ( z. B. Elektro-Wärmepumpe, zur Erwärmung von Heiz- und/oder Trinkwasser, nicht-modulierend oder modulierend)
· Energiemanager, mit der Hauptfunktion Schwellwertschalter (einstufig oder mehrstufig, ohne oder mit Analogausgang für den Solarstromertrag, ohne oder mit Betriebswächter für die Stromaufnahme der Wärmepumpe)
   · Elektro-Heizeinsatz (einstufig oder mehrstufig)in Kombination mit Maximaltemperaturbegrenzer für die Begrenzung der Speichertemperatur
   · Temperaturmodul.

Die Funktionsweise der Anlage wird in der Ausstattung mit dem optionalen Temperaturmodul wie folgt beschrieben:
Nach Sonnenaufgang steigt der Solarstromertrag der PV-Anlage an, bis er den in der Regelung frei einstellbaren Schwellwert übersteigt. In diesem Moment wird das Temperaturmodul aktiviert und über die zugeschaltete Widerstandskombination der Ist-Wert der Speichertemperatur gemäß obiger Beispiele um 15 oder 20 K verringert vorgetäuscht. Dies führt dazu, dass sich die Wärmepumpe zuschaltet, da der Soll-Wert der Speichertemperatur aus Sicht des WP-Reglers unterschritten wurde. Mit Hilfe des von der PV-Anlage gelieferten Stroms wird nun die Speichertemperatur auf den neuen, vorgetäuschten und erhöhten Soll-Wert angehoben.

Bei aus nachlassender solarer Intensität ausgelöster Unterschreitung des Schwellwertes wird das Temperaturmodul deaktiviert. Damit entfällt die Verschiebung der Speichertemperatur und der Wärmepumpen-Regler detektiert die Speichertemperatur als überhöht, so dass eine Zeitlang keine weitere Speicherladung erfolgen muss, da ein Energievorrat bereit steht.

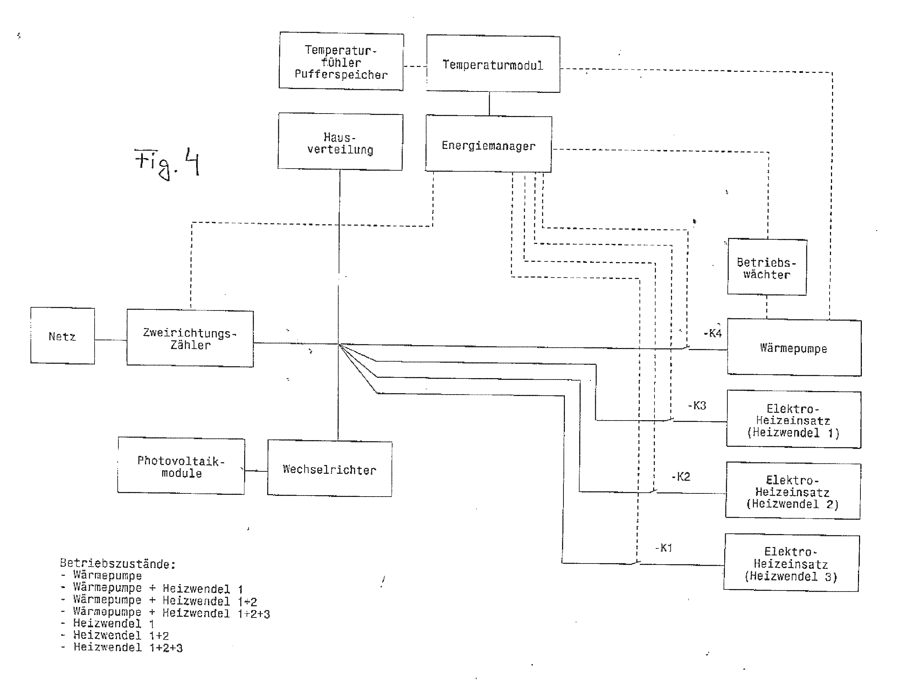

In einer weiteren vorteilhaften Ausgestaltung der Anlage und des Verfahrens wird eine mehrstufige Ansteuerung vorgeschlagen. Dies ist vor allem dann von Vorteil, wenn die Spitzenleistung der PV-Anlage die Leistungsaufnahme der Wärmepumpe deutlich, z. B. um 1 kW, übersteigt und zusätzlich ein Elektro-Heizeinsatz, zum Einsatz kommt. Statt des einstufigen Schwellwertschalters ist hier ein mindestens 2-stufiger Schwellwertschalter (hier 4-stufig) erforderlich. Das System (siehe Fig. 4) funktioniert dann wie folgt:
Nach Sonnenaufgang steigt der Ertrag in Form von elektrischer Energie der PV-Anlage an, bis dieser den ersten voreingestellten Schwellwert übersteigt. In diesem Moment wird das Temperaturmodul aktiviert und der Ist-Wert der Speichertemperatur z. B. um 20 K niedriger vorgetäuscht. Dies führt dazu, dass sich die Wärmepumpe zuschaltet, da der für Standardbetrieb im Regler hinterlegte Soll-Wert der Speichertemperatur aus Sicht des WP-Reglers unterschritten wird. Mit Hilfe des von der PV-Anlage gelieferten Stroms wird nun die Speichertemperatur auf den neuen, vorgetäuschten und erhöhten Soll-Wert angehoben. Bei weiter steigender solarer Intensität erhöht sich der elektrische Ertrag aus der Photovoltaikanlage weiter. Übersteigt dieser Ertrag die maximale Leistungsaufnahme der Wärmepumpe schaltet die nächste Stufe des Schwellwertschalters zusätzlich zur Wärmepumpe den Elektro-Heizeinsatz ein. Hierbei wird als Einschaltschwelle die Aufnahmeleistung des Heizstabes berücksichtigt. Mit Erreichen des vorgetäuschten erhöhten Soll-Wertes ist auch die von der Wärmepumpe aufgrund des Kältekreisdesigns maximal erreichbare Speichertemperatur erreicht, so dass die Wärmepumpe ausgeschaltet wird und nur noch mit dem Elektro-Heizeinsatz geheizt wird. Bei aus nachlassender solarer Intensität ausgelöster Unterschreitung des ersten Schwellwertes wird das Temperaturmodul deaktiviert. Damit entfällt die Verschiebung der Speichertemperatur und der Wärmepumpen-Regler detektiert die Speichertemperatur als überhöht, so dass für eine Zeitlang keine weitere Speicherladung erfolgen muss, da ein Energievorrat bereit steht.

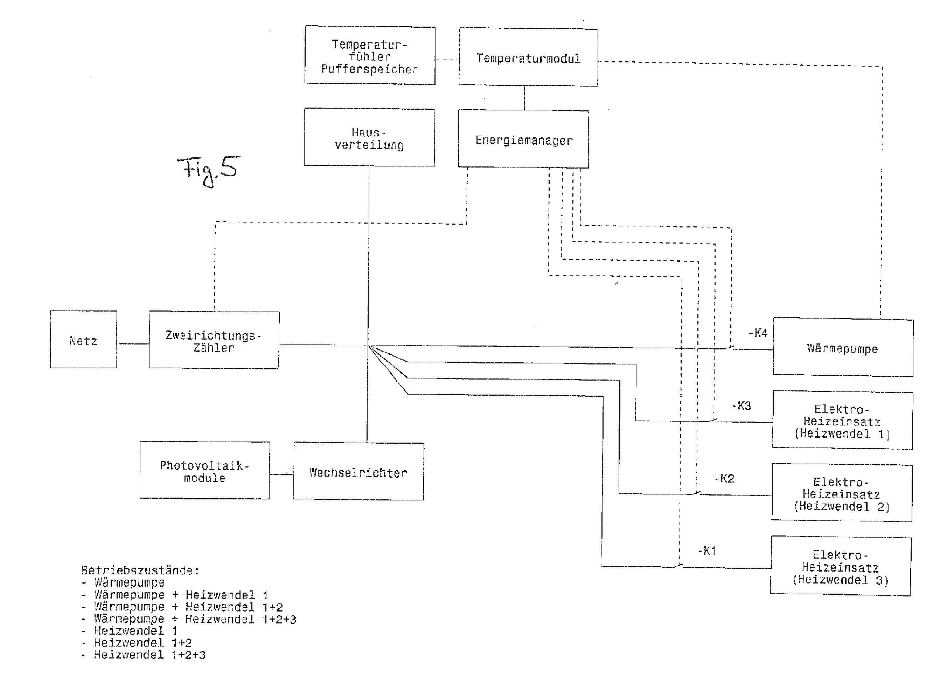

In einer weiteren vorteilhaften Ausgestaltung der Anlage und des Verfahrens gemäß Fig. 5 ist der Schwellwertschalter mit mehr als 2 Schaltstufen ausgestattet und verfügt zudem noch über einen Betriebswächter für die Stromaufnahme der Wärmepumpe. Dies erlaubt, die Speichertemperatur auch nach Abschalten der Wärmepumpe, z. B. infolge der aufgrund des Kältekreisdesigns maximal erreichbaren Speichertemperatur, durch Betrieb mit mindestens 2 Stufen eines mehrstufigen Elektro-Heizeinsatzes weiter zu erhöhen und dabei den Energievorrat für einen Zeitraum nach Ende des solaren Ertrags zu vergrößern. Die Temperaturerhöhung ist dann maximal bis zur am Maximaltemperaturbegrenzer eingestellten Temperatur möglich.

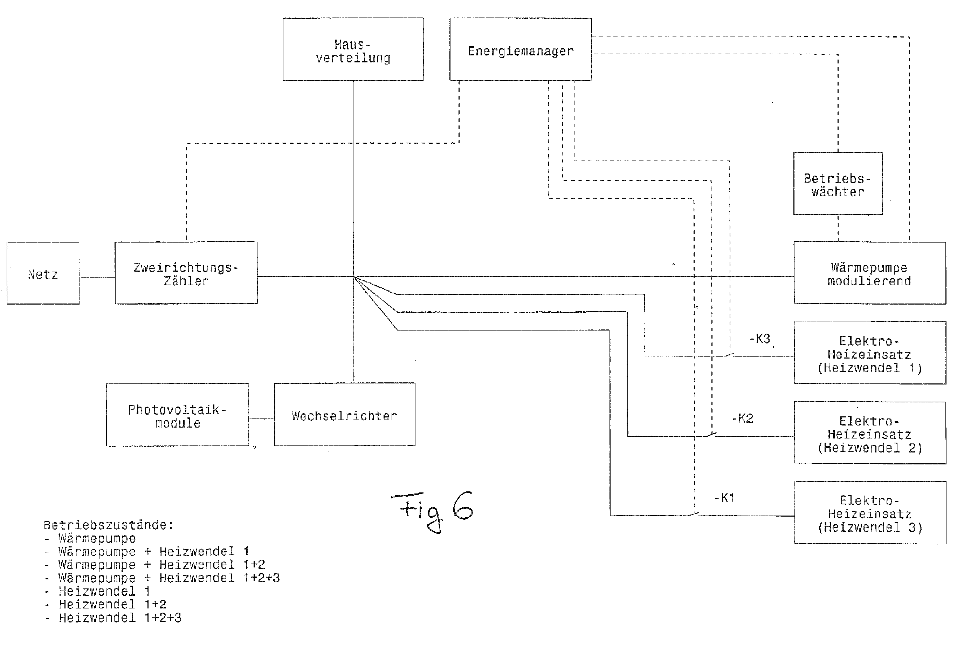

In einer besonders vorteilhaften Ausgestaltung der Anlage und des Verfahrens nach Fig. 6 wird eine gleitende Ansteuerung vorgeschlagen. Diese ist vor allem dann von Vorteil, wenn die Leistungsaufnahme der Wärmepumpe angepasst werden kann, z. B. durch Veränderung der Drehzahl des Kompressors. Der Schwellwert des Schwellwertschalters wird etwa auf den Wert der Mindest-Leistungsaufnahme der modulierenden Wärmepumpe eingestellt. Zudem muss der Schwellwertschalter so gestaltet sein, dass er ein Stetigsignal des momentanen solaren Stromertrages ausgibt, passend hierzu muss der Wärmepumpenregler in der Lage sein, die Leistungsaufnahme der Wärmepumpe durch Variation der Kompressordrehzahl dem solaren Energieangebot anzugleichen.

Das System funktioniert dann wie folgt:
Nach Erreichen des Schwellwertes wird das Temperaturmodul aktiviert und mittels der zugeschalteten Widerstandskombination der Ist-Wert der Speichertemperatur z. B. um 20 K niedriger vorgetäuscht. Dies führt dazu, dass sich die Wärmepumpe mit ihrer Mindest-Leistungsaufnahme zuschaltet, da der Soll-Wert der Speichertemperatur aus Sicht des Wärmepumpen-Reglers unterschritten wurde. Mit Hilfe des von der PV-Anlage gelieferten Stroms wird nun begonnen, die Speichertemperatur auf den neuen, vorgetäuschten und erhöhten Soll-Wert anzuheben.

Bei weiter steigender solarer Intensität gibt der Schwellwertschalter dies als analoges Signal an den WP-Regler weiter, so dass die Leistung der Wärmepumpe durch Erhöhung der Kompressordrehzahl und / oder Eingriff in die Parameter des Kältekreises bzw. durch eine Bypassschaltung auf der Wärme-Abnahmeseite soweit erhöht wird, dass deren Leistungsaufnahme mit dem solaren Angebot in etwa zur Deckung kommt. Mit Erreichen des vorgetäuschten erhöhten Soll-Wertes der Speichertemperatur ist auch die von der Wärmepumpe aufgrund des Kältekreisdesigns maximal erreichbare Speichertemperatur erreicht, so dass die Wärmepumpe ausgeschaltet wird. Bei aus nachlassender solarer Intensität ausgelöster Unterschreitung des ersten Schwellwertes wird das Temperaturmodul deaktiviert. Damit entfällt die Verschiebung der Speichertemperatur und der Wärmepumpenregler-Regler detektiert die Speichertemperatur als überhöht, so dass für eine Zeitlang keine weitere Speicherladung erfolgen muss, da ein Energievorrat bereit steht.

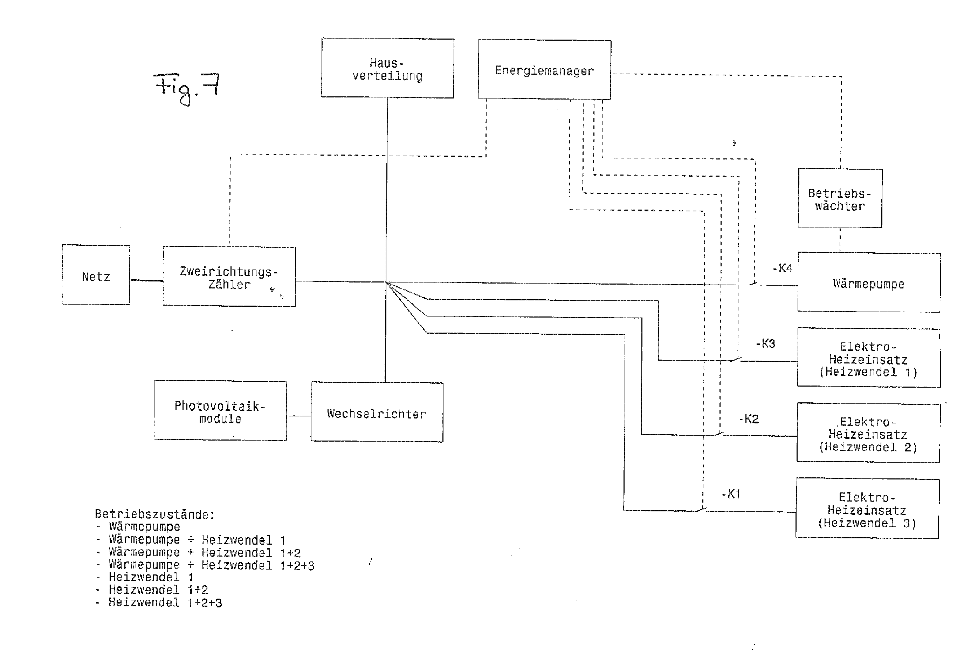

Es sind auch Varianten ohne Temperaturmodul (Fig. 7) denkbar. Dabei müssen die Energiemanager jeweils mehrstufig ausgeführt sein, um das Ziel der Bereitstellung eines Energievorrates zu erreichen, indem nach Abschalten der Wärmepumpe infolge Erreichens der aufgrund des Kältekreisdesigns maximal erreichbaren Speichertemperatur mit einem oder mehreren Elektro-Heizeinsätzen direkt elektrisch weiter geheizt und somit der solare Ertrag maximal in nutzbare Wärme umgewandelt wird.

Kombinationen der oben beschriebenen Systeme und Funktionen sind erfindungsgemäß ebenfalls möglich, also z. B. die Kombination einer modulierenden Wärmepumpe mit einem mehrstufigen Schwellwertschalter, der zusätzlich den momentanen solaren Ertrag als Analogsignal ausgibt.

Die o.g. Figuren zeigen die einzelnen Komponenten in verschiedenen Konfigurationen, Hausverteilung, Zweirichtungszähler, Photovoltaikmodule und Wechselrichter sind als bauseitig vorhanden anzusehen, zum besseren Verständnis aber jeweils mit eingezeichnet.

## Patentansprüche

1. Verfahren zur Erhöhung der Speicherkapazität von Wasserspeichern in Anlagen zur Beheizung von Gebäuden und/oder zur Erwärmung von Trink- und/oder Brauchwasser, wobei die Anlagen eine Photovoltaikanlage, einen elektrisch betriebenen Wärmeerzeuger mit einem Wärmespeicher und/oder mindestens einem elektrischen Heizstab, einen Energiemanager und ein Temperaturmodul umfassen, wobei die Anlagenteile Wärmeerzeuger und elektrischer Heizstab mit entsprechenden Temperaturfühlern ausgestattet sind, wobei von der Photovoltaikanlage über einen Energiezähler registrierte Elektroenergie erzeugt wird und in ein Stromversorgungsnetz eingespeichert wird und über den elektrisch betriebenen Wärmeerzeuger das Trink- und/oder Brauwasser erwärmt wird, **dadurch gekennzeichnet, dass**
über den Schwellwertschalter die von der Photovoltaikanlage zur Verfügung gestellte Elektroenergie ermittelt und ausgewertet wird und bei Erreichen eines frei einstellbaren Schwellwertes , ein elektrischer Kontakt zum elektrischen Wärmeerzeuger und/oder mindestens einem elektrischen Heizstab hergestellt wird, wobei nach der Herstellung des Kontaktes über den Schwellwertschalter das Temperaturmodul angesteuert wird, welches eine Vielzahl von Widerstandskombinationen umfasst, wobei durch Verschaltung mit den Temperaturfühlern des elektrischen Wärmeerzeugers und/oder des elektrischen Heizstabes eine vom tatsächlichen Temperaturwert abweichende Temperatur simuliert wird.

2. Vorrichtung zur Erhöhung der Speicherkapazität von Wasserspeichern in Anlagen zur Beheizung von Gebäuden und/oder zur Erwärmung von Trink- und/oder Brauchwasser, wobei die Anlagen eine Photovoltaikanlage, einen elektrisch betriebenen Wärmeerzeuger mit einem Wärmespeicher und/oder mindestens einem elektrischen Heizstab, wobei die Anlagenteile Wärmeerzeuger und elektrischer Heizstab mit entsprechenden Temperaturfühlern ausgestattet sind, wobei von der Photovoltaikanlage über einen Energiezähler registrierte Elektroenergie erzeugt wird und in ein Stromversorgungsnetz eingespeichert wird und über den elektrisch betriebenen Wärmeerzeuger das Trink- und/oder Brauwasser erwärmt wird, **dadurch gekennzeichnet, dass** im System ein Schwellwertschalter und ein Temperaturmodul integriert sind, wobei über den Schwellwertschalter die von der Photovoltaikanlage zur Verfügung gestellte Elektroenergie ermittelt und ausgewertet wird und bei Erreichen eines frei einstellbaren Schwellwertes, ein elektrischer Kontakt zum elektrischen Wärmeerzeuger und/oder mindestens einem elektrischen Heizstab hergestellt wird und nach der Herstellung des Kontaktes über den Schwellwertschalter das Temperaturmodul ansteuerbar ist, welches eine Vielzahl von Widerstandskombinationen aufweist und durch Verschaltung mit den Temperaturfühlern des elektrischen Wärmeerzeugers und/oder des elektrischen Heizstabes eine vom tatsächlichen Temperaturwert abweichende Temperatur simulierbar ist.
